# EUROPEAN PATENT APPLICATION

(11) **EP 4 047 938 A1**
(43) Date of publication of application: **24.08.2022**
(21) Application number: 22156194.7
(22) Date of filing: 10.02.2022
(51) Int. Cl.: H04N 21/414, H04N 21/431, H04N 21/478, H04N 21/4784, H04N 21/4788

(54) **METHOD FOR DISPLAYING INTERACTIVE INTERFACE AND APPARATUS THEREOF, METHOD FOR GENERATING INTERACTIVE INTERFACE**

(30) Priority: 23.02.2021 CN 202110200474
(71) Applicant: Beijing Dajia Internet Information Technology Co., Ltd., Beijing 100085 (CN)
(72) Inventor: WANG, Wei, Haidian District Beijing, 100085 (CN)
(74) Representative: Vossius & Partner Patentanwälte Rechtsanwälte mbB

(57) **Abstract**

The present disclosure relates to a method for displaying an interactive interface and apparatus thereof, and a method for generating an interactive interface. By acquiring an image of a target object in a live streaming interface; and acquiring an interactive interface for interacting with the target object by performing a fusion process on the image and a dynamic effect material, wherein all or a part of the image is occluded in an interactive interface, the interactive interface is displayed in the live streaming interface.

## Description

### TECHNICAL FIELD

The disclosure relates to the field of Internet technology, and in particular to a method for displaying an interactive interface, a method for generating an interactive interface, an apparatus, an electronic device, a computer storage media, and a program product.

### BACKGROUND

In the field of Live Streaming, anchors may use a live streaming application to conduct a video live streaming to show wonderful programs to audiences, and the audiences can also watch the live streaming through the live streaming application. Interactive Live Streaming is an enhanced application of a video live streaming, which adds interactive functions to the process of a video live streaming.

In related technologies, interactive functions in the interactive live streaming include interactions which adding voice and video into the video live streaming.

### SUMMARY

The present disclosure provides a method for presenting an interactive interface, a method for generating an interactive interface, an apparatus, an electronic device, a storage media, and a program product, so as to at least solve problems in related technologies. The technical solutions of the present disclosure are as follows.

According to some embodiments of the present disclosure, there is provided a method for displaying an interactive interface. The method may include: acquiring an image of a target object in a live streaming interface; acquiring an interactive interface for interacting with the target object by performing a fusion process on the image and a dynamic effect material, wherein all or a part of the image is occluded in an interactive interface; and displaying the interactive interface in the live streaming interface.

In some embodiments, the method for displaying the interactive interface further includes displaying a corresponding animation effect based on a received interactive instruction for the interactive interface, and the animation effect comprising displaying the occluded image.

In some embodiments, said displaying the corresponding animation effect based on the received interactive instruction for the interactive interface includes: collecting a voice signal issued by the target object and determining a first instruction content corresponding to the voice signal; acquiring a scene sound effect corresponding to the first instruction content; and playing the scene sound effect.

In some embodiments, said displaying the corresponding animation effect based on the received interactive instruction for the interactive interface includes: collecting posture information of a client and determining a second instruction content corresponding to the posture information; and displaying an animation effect corresponding to the second instruction content.

In some embodiments, in case that a plurality of interactive interfaces are generated by respectively performing fusion processes on the image and a plurality of the dynamic effect materials, a number of the interactive interfaces is multiple; and the method for displaying the interactive interface further includes: in response to determining that a touch position of the target object in the live streaming interface matches a displaying area of the image in the animation effect based on the interactive instruction, displaying a new interactive interface selected from a set of interactive interfaces, wherein the set of interactive interfaces includes a plurality of interactive interfaces generated by the image and a plurality of the dynamic effect materials.

In some embodiments, the method for displaying the interactive interface further includes: in response to determining that the touch position of the target object in the live streaming interface matches the displaying area of the image in the animation effect, determining that the target object finds the image in the interactive interface; accordingly adjusting a number of times the image is found; acquiring a duration of displaying the interactive interfaces; and in case that the duration reaches an upper limit of a time threshold, displaying a first prompt message, wherein the first prompt message includes the number of times the image is found.

In some embodiments, the method for displaying the interactive interface further includes: displaying a second prompt message for indicating that issues a reward resource to an account of the target object, wherein the reward resource is determined based on the number of times the image is found.

In some embodiments, the method for displaying the interactive interface further includes: in response to a preset time for finding the image is up, displaying a ranking list of respective target objects in a live streaming room, wherein the ranking list is obtained by a sorting processing on final numbers of times images of respective target objects are found.

In some embodiments, the method for displaying the interactive interface further includes: determining the target object of which final number of times of finding meets a preset condition as an interactive object, based on the final numbers of times images of respective target objects are found; and establishing a communication connection between an account of the interactive object and an account of an anchor.

In some embodiments, the method for displaying the interactive interface further includes displaying a display control of the interactive interface in the live streaming interface; wherein said displaying the interactive interface in the live streaming interface includes in response to the display instruction of the interactive interface, displaying the interactive interface in the live streaming interface through the display control.

In some embodiments, the dynamic effect material is determined by any one of: acquiring the dynamic effect material generated by a multi-frame video image, wherein the multi-frame video image is a multi-frame image acquired in a live streaming scene or a video data of the target object; and acquiring the dynamic effect material from a dynamic effect material library, wherein the dynamic effect material library is a collection of dynamic effect materials stored on a client or a server.

In some embodiments, wherein the image is determined by any one of: in response to a shooting instruction, acquiring the image obtained by shooting the target object or a target part of the target object; acquiring the image of the target object from an image library, wherein the image library is a collection of images stored on a client or a server; and acquiring a head portrait data of the target object.

In some embodiments, the interactive instruction comprises any one of: the interactive instruction generated by touching the interactive interface; the interactive instruction determined by recognizing a posture of the target object; the interactive instruction determined by collected posture information of the client; and the interactive instruction determined by collected voice signal.

According to some embodiments of the present disclosure, there is provided a method for generating an interactive interface. The method for generating the interactive interface may include: acquiring an image of a target object in a live streaming interface; acquiring an interactive interface for interacting with the target object by performing a fusion process on the image and a dynamic effect material, wherein all or a part of the image is occluded in an interactive interface; and returning the interactive interface to a client, wherein the interactive interface is configured to instruct the client to display the interactive interface on the live streaming interface.

According to some embodiments of the present disclosure, there is provided an apparatus for displaying an interactive interface. The apparatus for displaying the interactive interface may include: a first image acquisition module configured to acquire an image of a target object in a live streaming interface; a fusion processing module configured to acquire an interactive interface for interacting with the target object by performing a fusion process on the image and a dynamic effect material, wherein all or a part of the image is occluded in an interactive interface; and a first interface displaying module configured to display the interactive interface in the live streaming interface.

The technical solution provided by the embodiments of the disclosure may include the following beneficial effects.

By way of acquiring an image of a target object in a live streaming interface; acquiring an interactive interface for interacting with the target object by performing a fusion process on the image and a dynamic effect material, wherein all or a part of the image is occluded in an interactive interface, the interactive interface is presented in the live streaming interface. The present disclosure increases the interactive mode of the live streaming room, improves the interactive effect and the interactive interest, thereby enhancing the user's interactive experience.

It should be understood that the above general description and the following detailed description are only exemplary and explanatory, and do not limit the disclosure.

### BRIEF DESCRIPTION OF THE DRAWINGS

The drawings herein are incorporated into the specification and constitute a part of the specification, show embodiments conforming to the disclosure, and together with the specification are used to explain the principle of the disclosure, and do not constitute an improper limitation of the disclosure.
FIG. 1 is an application environment diagram showing a method for displaying an interactive interface according to some embodiments.
FIGS. 2A to 2B are flowcharts showing a method for displaying an interactive interface according to some embodiments.
FIG. 3 is a flowchart showing a step 220b according to some embodiments.
FIG. 4 is a flowchart showing a method for displaying an interactive interface according to some embodiments.
FIGS. 5A to 5C are schematic diagrams showing interactive interfaces according to some embodiments.
FIG. 6 is a flowchart showing a method for displaying an interactive interface according to some embodiments.
FIG. 7 is a flowchart showing a method for generating an interactive interface according to some embodiments.
FIG. 8 is a time sequence diagram showing a method for displaying an interactive interface according to some embodiments.
FIG. 9 is a block diagram showing an apparatus for displaying an interactive interface according to some embodiments.
FIG. 10 is a block diagram showing an apparatus for generating an interactive interface according to some embodiments.
FIG. 11 is an internal structure diagram of an electronic device according to some embodiments.
FIG. 12 is a diagram showing an internal structure of a server according to some embodiments.

### DETAILED DESCRIPTION

In order to enable those of ordinary skill in the art to better understand the technical solutions of the present disclosure, the technical solutions in the embodiments of the present disclosure will be described clearly and completely in conjunction with the accompanying drawings.

It should be noted that terms "first" and "second" in the specification and claims of the present disclosure and the above-mentioned drawings are used to distinguish similar objects, and not necessarily used to describe a specific sequence or a sequential order. It should be understood that the data used in this way can be interchanged under appropriate circumstances, so that the embodiments of the present disclosure described herein can be implemented in an order other than those illustrated or described herein. The implementation manners described in the following embodiments do not represent all implementation manners consistent with the present disclosure. Rather, they are merely examples of apparatus and methods consistent with some aspects of the present disclosure as detailed in the appended claims.

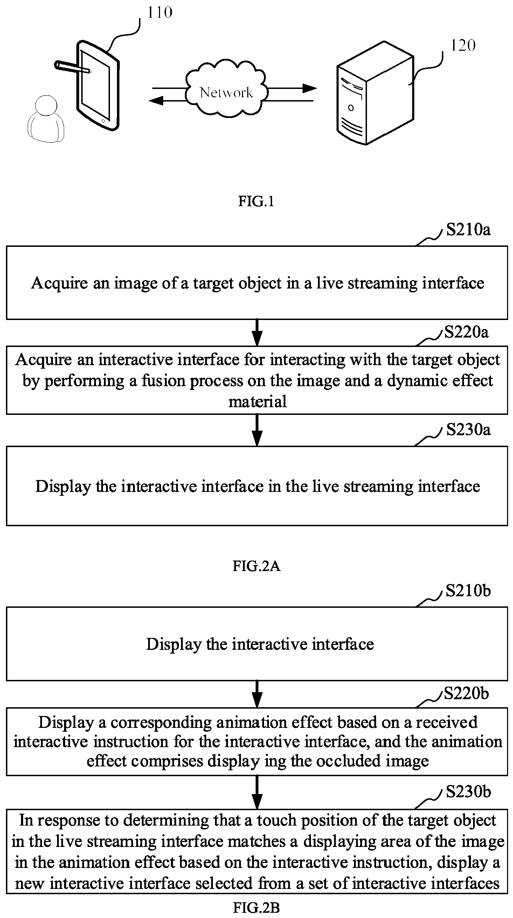

The method for displaying an interactive interface provided by the present disclosure can be applied to an application environment as shown in FIG. 1. A client 110 interacts with a server 120 through a network. A live streaming application or an application with a live streaming function is installed on the client 110. The client 110 includes a screen for human-computer interaction, which is used to display a live streaming interface, a special effect image or an animation effect and the like in the live streaming interface. The server 120 has a dynamic effect library. The dynamic effect library includes at least one dynamic effect material. The server 120 may acquire an image of a target object in the live streaming interface, randomly acquire at least one dynamic effect material from the dynamic effect library, and conduct a fusion processing on the image and the dynamic effect material to obtain an interactive interface for interacting with the target object and return it to the client 110. All or a part of the image is occluded in the interactive interface, and the interactive interface may include an image comprised of several frames. The client 110 may receive at least one interactive interface. The client 110 may display the received interactive interface in the live streaming interface through the screen for human-computer interaction, and display a corresponding animation effect in the live streaming interface in response to an interactive instruction of the interactive interface. The animation effects include displaying an image of the occluded target object. In response to determining that a touch position of the target object in the live streaming interface matches a displaying area of the image in the animation effect according to the interactive instruction, a new interactive interface is selected from a set of interactive interfaces to display. The set of interactive interfaces may include a plurality of interactive interfaces generated by the image and a plurality of dynamic effect materials. The client 110 may be, but is not limited to, various personal computers, notebook computers, smart phones, tablet computers, and portable wearable devices. The server 120 may be implemented by an independent server or a server cluster composed of multiple servers.

FIG. 2A is a flowchart showing a method for displaying an interactive interface according to some embodiments. As shown in FIG. 2A, the method for displaying the interactive interface is applied to the client 110 and includes the following steps.

In S210a, an image of a target object in a live streaming interface is acquired.

In S220a, one or more interactive interfaces for interacting with the target object are obtained by performing one or more fusion processes on the image and one or more dynamic effect materials.

In S230a, an interactive interface is displayed in the live streaming interface.

In some embodiments, the target object may be a user of a live streaming application, such as a viewer in a live streaming room or an anchor in a live streaming room. The image of the target object may be a head portrait data of the target object in the live streaming interface, or an image of the target object displayed in the live streaming interface. Specifically, in a live streaming scene, in response to a shooting instruction, the target object or a target part of the target object may be shot to obtain an image of the target object. The image of the target object can also be acquired from a set of images stored on the client or the server. It is also possible to acquire the head portrait data of the target object as the image of the target object.

In some embodiments, the dynamic effect material is a template used to perform an image processing (such as a dynamic effect processing) on an image to obtain an interactive interface. The interactive interface may include a picture sequentially comprised of several frames. The interactive interface may be a video file, such as a short video, or a frame-by-frame animation file, and may also have a dynamic picture, such as a Graphics Interchange Format (GIF) image. It is possible to acquire the dynamic effect material generated by a multi-frame video image, and the multi-frame video image is the multi-frame image obtained in the live streaming scene or video data of the target object. The dynamic effect material is obtained from the dynamic effect material library, which is a collection of dynamic effect material stored on the client or server. The interactive interface is used to interact with the target object. All or a part of the image is occluded in a corresponding one of the interactive interfaces.

In some embodiments, the dynamic effect material is acquired, and the dynamic effect material may be used to perform a dynamic effect processing on the image of the target object to generate an interactive interface, or the image of the target object can be embedded in the dynamic effect material to generate an interactive interface. A specified area in the dynamic effect material may be replaced with the image of the target object, and the fusion processing is performed on the image and the specified area to generate the interactive interface. After the client obtains the interactive interface for interacting with the target object, the interactive interface is displayed in the live streaming interface.

For example, the dynamic effect material may include a picture composed of several frames. The content of the picture includes a little lamb running on grassland and a big tree which occludes the little lamb. The image of the target object can be used to replace a head area of the little lamb in the picture. The client may display the interactive interface in the live streaming interface. The content of the interactive interface may include that the big tree occludes all or a part of the image of the target object, and as the lamb runs on the grassland, the all or part of the image of the target object is exposed.

In the above method for displaying interactive interface, by acquiring the image of the target object in the live streaming interface, fusing the image and the dynamic effect material to obtain the interactive interface for interacting with the target object, and in the interactive interface, occluding or shielding all or a part of the image, displays the interactive interface in the live streaming interface. The embodiments increase the interactive mode of the live streaming room, improve the interactive effect and the interactive interest, thereby enhancing the user's interactive experience.

FIG. 2B is a flowchart showing a method for displaying an interactive interface according to some embodiments. As shown in FIG. 2B, the method for displaying an interactive interface is applied to the client 110 and includes the following steps.

In S210b, the interactive interface is displayed.

In S220b, a corresponding animation effect is displayed based on the received interactive instruction for the interactive interface, and the animation effect may include displaying the occluded or shielded image.

In S230b, in response to determining that a touch position of the target object in the live streaming interface matches a displaying area of the image in the animation effect based on the interactive instruction, displaying a new interactive interface selected from a set of interactive interfaces.

In some embodiments, the interactive interface is generated by performing a dynamic effect processing on the image of the target object using a dynamic effect material, such as embedding the image of the target object in the dynamic effect material. The interactive interface is displayed in a certain application interface of the client, such as the interface of a live streaming application. The user can directly interact with the interactive interface, and the dynamic effects in the interactive interface can provide the user with a good dynamic immersive experience. The interface animation is displayed to the user by using the interface elements in the interactive interface, thus showing the corresponding animation effect.

Specifically, on the one hand, the client has a local dynamic effect library. The client may acquire the image of the target object, acquire the dynamic effect material from the dynamic effect library, and perform dynamic effect processing on the image of the target object by using the dynamic effect material to generate an interactive interface, and the generated interactive interface is displayed at the client. On the other hand, the server has a dynamic effect library. The server may acquire the image of the target object, obtain dynamic effect material from the dynamic effect library, perform dynamic effect processing on the image of the target object by using the dynamic effect material to generate an interactive interface, and the generated interactive interface is returned to the client. The client receives the interactive interface and displays the interactive interface. In some embodiments, a live streaming application or an application with a live streaming function installed on the client is opened, and the client displays an interactive interface, which is generated by performing the dynamic effect processing on the image of the target object via the dynamic effect material.

In some embodiments, the interactive instruction is an instruction triggered when the user interacts with the interactive interface through the client thereof. The animation effect can be displaying, on the client' screen, changes of the image in the interactive interface, or displaying some theme scenes through the animation effect, such as using the dynamic firework state to express the joyous and lively scenes of the Spring Festival, Christmas, New Year and other festivals; using lightning, blowing the grassland with wind, blowing leaves with wind, running animals on the grassland, gurgling water and other animation effects to express natural scenes; opening/closing curtains, sweeping the floor, opening pot lids and other animation effects to express life scenes. Similarly, audio content in the scene sound effect can also be played via the speaker, such as sound of gusts of wind, thunder, rain, rushing water, and sound of horseshoes.

In some embodiments, the target object interacts with the client via the interactive interface, and issues the interactive instruction. In response to the interactive instruction, and the image in the interactive interface of the client changes and displays a corresponding animation effect. For example, the position of the interface element in the interactive interface changes or the state of the interface element changes, curtains of the interactive interface are blown up by the wind, and paper balls in the interactive interface are swept into the dustpan. Furthermore, since the image of the target object is embedded in the dynamic effect material to obtain an interactive interface, and the image of the target object is occluded, the positions or states of the interface elements change during the process of displaying the animation effect, that is, the animation effect includes displaying the occluded image. It is understandable that displaying the occluded image includes displaying a part or all of occluded image, such as displaying only a corner of the occluded image. As the target object interacts with the interactive interface, the occluded image is completely exposed and the animation effect includes displaying all parts of the image of the target object.

In some embodiments, the set of interactive interfaces includes multiple interactive interfaces generated by the image and multiple dynamic effect materials, respectively. Specifically, in the process of the target object interacting with the interactive interface, an interactive instruction is triggered, such as the target object performs an operation on the image, such as controlling motion track of the image, discovering the image, etc. Therefore, the touch position of the target object in the live streaming interface can be determined based on the interactive instruction, and then whether the touch position matches the displaying area of the image in the animation effect is determined. If the touch position matches the displaying area of the image in the animation effect, the client selects a new interactive interface from the set of interactive interfaces and displays the new interactive interface.

In the above interactive interface displaying method, by way of displaying the interactive interface generated by performing the dynamic effect processing on the image of the target object using the dynamic effect material; displaying the corresponding animation effect based on the received interactive instruction of the interactive interface, wherein the animation effect includes displaying the occluded image; in response to determining, based on the interactive instruction, that position confirmation information about a location or a site where the target object performs on the image matches the displaying area of the image in the animation effect, and displaying a new interactive interface, the embodiments realize the diversification of the interactive modes in the live streaming room, improves the interactive effect and the interactive interest, and thereby enhancing the user's interactive experience.

In some embodiments, the image of the target object is determined in any one of: in response to a shooting instruction, acquiring an image obtained by shooting the target object or a target part of the target object; or acquiring the image of the target object from an image library, the image library is a collection of images stored on the client or server; or acquiring head portrait data of the target object.

In some embodiments, the shooting can be take a picture or image pickup. The shooting instruction may be an instruction issued by the target object to the client to conduct a shoot, and the target object may trigger the shooting instruction in the form of voice, jitter, single click, or double click. In response to the shooting instruction, the client starts to run a shooting process based on the shooting instruction, and shoots the target object or the target part of the target object to obtain an image of the target object or the target part. The target part can be hands, face, eyes and other parts.

The client is equipped with an image library. The image library of the client stores a number of pictures or video files of the target object. The image of the target object may be acquired by selecting a picture from the image library of the client. Alternatively, a picture may be acquired from the video file to treat as the image of the target object.

The server is equipped with an image library. The image library of the server stores several pictures or video files of the target object. The image data may be acquired by selecting a picture from the image library of the server. Alternatively, a picture may be acquired from the video file to treat as the image of the target object.

The target object has a corresponding head portrait data, the head portrait data of the target object can be directly obtained, and the head portrait data of the target object is used as the image.

In this embodiment, the image of the target object is acquired in a variety of ways to increase the diversity of special effect images, thereby enhancing the interest of live streaming interaction.

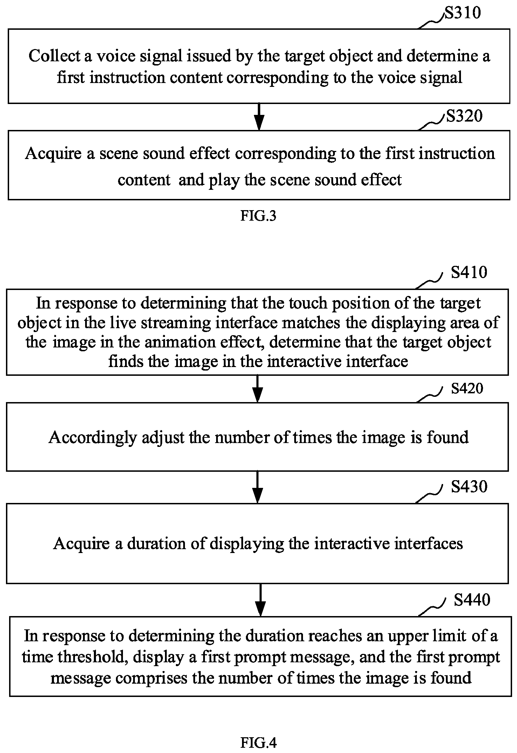

In some embodiments, the step of displaying the corresponding animation effect based on the received interactive instruction of the interactive interface can be specifically implemented through the following steps, as shown in FIG. 3.

In S310, a voice signal issued by the target object is collected, and a first instruction content corresponding to the voice signal is determined.

In S320, a scene sound effect corresponding to the first instruction content is acquired, and the scene sound effect is played.

In some embodiments, the client has a microphone, the voice signal emitted by the target object is collected through the microphone of the client, the collected voice signal is recognized, and the first instruction content corresponding to the voice signal is determined. Based on the first instruction content, the interface elements in the interactive interface can be manipulated to change, and the corresponding animation effect can be displayed. The corresponding scene sound effect can also be acquired according to the first instruction content, and the scene sound effect can be played through the speaker of the client to vividly display the interactive scene, enhance the interactive interest, and better attract users. In some embodiments, the dynamic effect material may be a material image of a horse running on a grassland, and the image of the target object is embedded in the material image, such as identifying a location of the horse's head in the material image, and placing the image of the target object at that location to form an image of a horse having a human portrait, or the image of the target object is fused with the material object to form an image of the target object riding a horse. The material image also includes a big tree, and the image with a horse having a human portrait or the image of a target object riding the horse being obscured by the big tree. An image of the grassland with a big tree is displayed in the interactive interface. The target object sends out voice signals such as 'go' or 'move' or 'good' into a microphone of the client. The interface elements or images in the interactive interface change, gradually revealing an image comprising the body of the horse and the target object, while also releasing scenes of horse tearing or horse DaDa running.

In this embodiment, by playing the scene sound effect corresponding to the first instruction content, the fidelity of the interaction scene with the user is further improved, the user experience is improved, and a retention rate of the user is increased. In Internet products, retention refers to a user returning to a product again at a period of time after starting the addition or use of the product. The retention rate refers to a ratio of the number of users returning to the product to the initial number of users.

In some embodiments, displaying corresponding animation effect based on the received interactive instruction of the interactive interface in S220 can be specifically implemented by the following steps: collecting posture information of the client and determining a second instruction content corresponding to the posture information; displaying an animation effect corresponding to the second instruction content.

Specifically, the client has a gyroscope. The posture information of the client is collected through the client's gyroscope, and the collected posture information is analyzed. The operation of the target object is determined by comparing the posture information before and after the operation of the target object, and the second instruction content corresponding to the posture information is determined. Based on the second instruction content, the interface elements in the interactive interface can be manipulated to change, thus displaying the corresponding animation effect. In this embodiment, the interactive scene is realistically displayed, which enhances the interest of the interaction and better attracts users.

In some embodiments, as shown in FIG. 4, the method for displaying the interactive interface further includes the following steps.

In S410, in response to determining that the touch position of the target object in the live streaming interface matches the displaying area of the image in the animation effect, it is determined that the target object finds the image in the interactive interface.

In S420, the number of times that the image is found is adjusted accordingly.

In S430, a duration of displaying the interactive interfaces is acquired.

In S440, in response to determining that the duration reaches an upper limit of a time threshold, a first prompt message is displayed; and the first prompt message includes the number of times that the image is found.

In some embodiments, the upper limit of the time threshold is the longest time for the target object to interact with the interactive interface. Specifically, since the image of the target object is embedded in the dynamic effect material to generate a corresponding interactive interface, the target object can find its own image in the interactive interface. The target object issues an interactive instruction to the interactive interface, and then the image or interface element in the interactive interface changes, so the corresponding animation effect can be displayed. The animation effect may include displaying the occluded image. At this time, the target object may find the image and needs to perform an operation on the image, and then it is judged whether the position confirmation information about the location of the operation performed by the target object on the image matches the displaying area of the image in the animation effect. In case that the position confirmation information of the target object matches the displaying area of the image in the animation effect, it indicates that the target object finds its own image in the interactive interface, and the number of times the image is found is adjusted accordingly. In addition, the client can be provided with a progress bar control to display the progress of the interaction between the target object and the interactive interface, and the progress bar control can be used to reflect the number of times the image is found. The duration of the interactive interface, that is, the duration of the interaction between the target object and the interactive interface, is displayed by the client. In response to that the interaction duration reaches the upper limit of the time threshold, a first prompt message is displayed by the client, and the first prompt message includes the number of times the image is found. It is understandable that during the process of displaying the interactive interface on the client, the target object may not interact with the interactive interface, which means the target object does not find the image when the time limit is reached, that is, the number of times the image is found is zero.

In this embodiment, by adjusting the number of times the image is found, obtaining the duration for displaying the interactive interface, and displaying the first prompt message when the duration reaches the upper limit of the time threshold, the user's sense of participation in interactive activities is enhanced and the user's interactive experience is improved.

In some embodiments, the interaction instruction may include: an interaction instruction generated by touching the interactive interface, an interaction instruction determined by recognizing posture of the target object, an interaction instruction determined by the collected posture information of the client, and an interactive instruction determined by the collected voice signal.

In some embodiments, the target object can trigger the interactive instruction with the interactive interface by touching the interactive interface, such as clicking, double-clicking, sliding, opening and closing fingers, and so on. The posture of the target object can be collected through an image acquisition device of the client, and the posture of the target object can be recognized, so as to determine the interactive instruction triggered by the target object. The target object can shake or waggle the client, and then collect the client's posture information to determine the interactive instruction triggered by the target object. The voice signal can also be collected through the microphone of the client, and the voice signal can be recognized, so as to determine the interactive instruction triggered by the target object.

In this embodiment, the interactive instruction is triggered by touching the interactive interface, collecting voice signals, collecting posture information of the client, etc., to increase the interactive mode with the user, which can attract the user and increase the retention rate of the user.

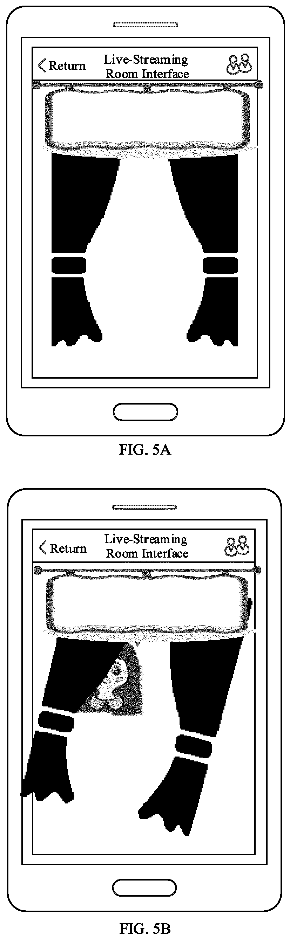

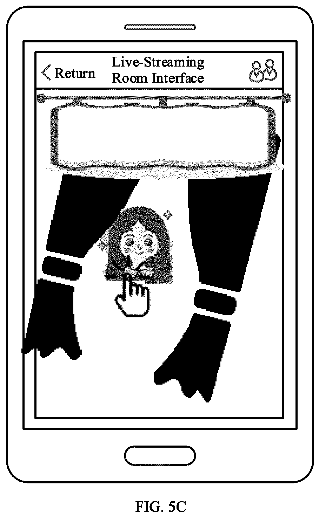

For example, as shown in FIG. 5A, firstly, the client displays an interactive interface. The interactive interface is generated by embedding the head portrait of the target object in the dynamic effect material, and the effect generated by embedding the head portrait of the target object in a curtain dynamic effect material is that the head portrait is hidden behind the curtain. Next, as shown in FIG. 5B, a corresponding animation effect is displayed based on the received first interactive instruction of the interactive interface, and the occluded head portrait is exposed in the animation effect. For example, when the target object shakes the client or blows into the microphone of the client, thus making the curtain has a shaking animation effect, the head portrait hidden behind the curtain is exposed, indicating that the target object has found its own image in the interactive interface. Finally, as shown in the FIG. 5C, the target object needs to perform some operations on its own head portrait, such as clicking or double-clicking to interact with the client, and then the client receives a second interactive instruction of the interactive interface. In response to determining that the location confirmation information about operations performed by the target object on his own head portrait matches the displaying area of his own head portrait in the animation effect based on the second interactive instruction, it is indicated that the target object has found the head portrait in the interactive interface, a new interactive interface is displayed on the client. While showing the new interactive interface, some compliments such as 'You find it. Awesome!' are also displayed in the live streaming interface to enhance the user experience.

In some embodiments, the method for displaying the interactive interface further includes the following step: displaying a second prompt message for indicating that issues a reward resource to the target object.

In some embodiments, the reward resource is determined based on the number of times the image is found. Specifically, in case that the duration reaches the upper limit of the time threshold, the number of times the image is found is obtained by the client and sends it to the server. The server determines a corresponding reward resource based on the number of times the image is found, and transfers the corresponding reward resource to the account of the target object. The server sends, to the client, the second prompt message for indicating that the reward resource is to be issued to the account of the target object, and the client receives the second prompt message and displays it. For example, different number of times will correspond to different levels of reward resources. After the interaction ends, the reward resource is issued based on the level reached by the number of times the image is found, and also a prompt is given. The reward resources can be playground tickets or invitation cards for offline festival-themed events.

In this embodiment, by issuing reward resources to accounts of the target objects, users are attracted to participate in interactive activities, so the user retention rate is increased, and the second prompt message is displayed to the user to clearly inform the information about the reward resources.

In some embodiments, the method for displaying the interactive interface further includes: in response to a preset time for finding the images is up, displaying a ranking list of respective target objects in the live streaming room; wherein the ranking list is obtained by sorting based on final number of times the images of respective target objects are found. The preset time for finding the image is up means that reaches a cut-off time for finding the images.

In some embodiments, the preset time refers to a maximum length of time allowed to participate in finding the image of the target object. The preset time can be manually configured by the anchor when creating the live streaming room or it can be a pre-configured default threshold. Each target object may be an audience who participates in an interactive activity of looking for images in the live streaming room. Specifically, in response to r a preset time for finding the images is up, images of respective target objects or account identifications of respective target objects are sorted or ranked based on the final number of times the images of respective target objects are found, in order to generate a ranking list of respective target objects and display the ranking list on the live streaming page.

In this embodiment, the ranking process is performed based on the final number of times the images of respective target objects are found to obtain the ranking list of the live streaming room, which enriches the interaction between the anchor and the target object, helps increase the number of audiences in the live streaming room, and improves the stay time of the audience participated in the live streaming room.

In some embodiments, the method for displaying the interactive interface further includes: based on the final number of times the images of respective target objects are found, determining the target object of which final number of times meets a preset condition as an interactive object; and establishing a communication connection between the account of the interactive object and the anchor account.

In some embodiments, the preset condition is a condition that the interactive object that wants to establish a communication connection with the anchor account needs to meet. Specifically, based on the final number of times the images of respective target objects are found, the target object of which final number of times meets the preset condition is determined as the interactive object; and then the communication connection between the account of the interactive object and the anchor account is established. For example, the preset condition can be set to establish a communication connection between the top interactive object of the ranking list in the live streaming room and the anchor. For example, it can be link the microphone with the anchor, or it can be a game against the anchor. Alternatively, it can be an established communication connection between the top three of the ranking list and the anchor, that is, the anchor links the microphone with respective interactive objects in turn from high to low according to the order in the list.

In this embodiment, the interactive object interacting with the anchor is determined based on the final number of times the images of respective target objects is found, which can not only enhance the sense of participation of the audiences, but also enhance the interest of activities the live streaming room.

In some embodiments, before displaying the interactive interface in the live streaming interface, the method for displaying the interactive interface further includes: displaying a display control of the interactive interface in the live streaming interface. Furthermore, displaying the interactive interface in the live streaming interface includes: in response to a display instruction of the interactive interface, displaying the interactive interface in the live streaming interface via the display control.

In some embodiments, the client displays the live streaming interface, and the live streaming interface has the display control for the interactive interface, and the target object may touch the display control to trigger a display instruction for the interactive interface. Since the client has already obtained an interactive interface for interacting with the target object, the interactive interface is displayed in the live streaming interface in response to the display instruction of the interactive interface.

In this embodiment, by setting the display control of the interactive interface, the user is clearly informed of the way to participate in the live streaming interactive activity, which is beneficial for the user to actively participate in the live streaming interactive event and improves the retention rate of the user.

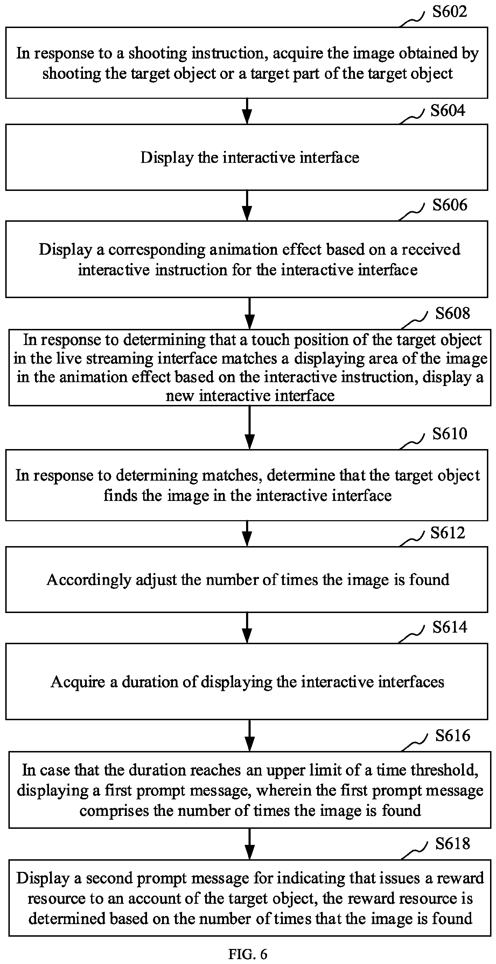

FIG. 6 is a flowchart showing a method for displaying an interactive interface according to some embodiments. As shown in FIG. 6, the method for displaying the interactive interface is applied to the client 110 and may include the following steps.

In S602, in response to a shooting instruction, an image obtained by shooting a target object or a target part of the target object is acquired.

In S604, an interactive interface is displayed.

In some embodiments, the interactive interface is generated by performing a dynamic effect processing on the image of the target object by way of using dynamic effect material.

In S606, a corresponding animation effect is displayed based on the received interactive instruction of the interactive interface.

In some embodiments, the animation effect includes showing the occluded image. Specifically, a voice signal issued by the target object may be collected, a first instruction content corresponding to the voice signal may be determined, and then a scene sound effect corresponding to the first instruction content may be acquired and played. The posture information of the client may also be collected, an instruction content corresponding to the posture information may be determined, and animation effect corresponding to the instruction content may be displayed.

In S608, in response to, based on the interactive instruction, determining that a touch position of the target object in the live streaming interface matches a displaying area of the image in animation effect, a new interactive interface is displayed.

In some embodiments, the new interactive interface selected from a set of interactive interfaces is displayed. The set of interactive interfaces includes multiple interactive interfaces generated by the image and multiple dynamic effect materials.

In S610, in response to determining that the touch position of the target object in the live streaming interface matches the displaying area of the image in animation effect, it is determined that the target object finds the image in the interactive interface.

In S612, the number of times the image is found is adjusted accordingly.

In S614, a duration of displaying the interactive interface is acquired.

In S616, in case that the duration reaches an upper limit of a time threshold, a first prompt message is displayed, and the first prompt message includes the number of times the image is found.

In S618, a second prompt message indicating that issues a reward resource to an account of the target object is displayed; the reward resource is determined based on the number of times that the image is found.

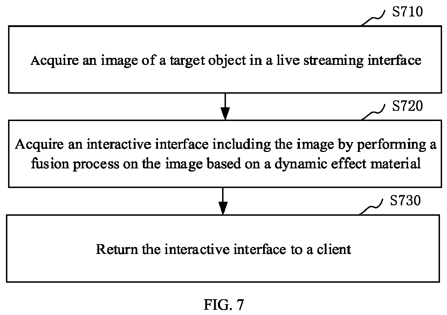

FIG. 7 is a flowchart showing a method for generating an interactive interface according to some embodiments. As shown in FIG. 7, the method for generating the interactive interface is applied to the server 120 and includes the following steps.

In S710, an image of the target object is acquired.

In S720, a corresponding dynamic effect processing is performed on the image based on one or more dynamic effect materials, to obtain one or more interactive interfaces including the image.

In S730, the interactive interfaces are returned to the client. The interactive interfaces are used to instruct the client to display a corresponding animation effect based on the received interactive instruction of the interactive interface. The corresponding animation effect includes displaying the occluded image. In the case of determining that position confirmation information about the location where the operation performed by the target object to the image matches the displaying area of the image in the animation effect according to the interactive instruction, and the new interactive interface is displayed.

In some embodiments, the method for generating the interactive interface further includes: issuing a reward resource to an account of the target object; the reward resource is determined according to the number of times the image is found, and the number of found times is the number of times that the target object finds the image in the interactive interface. In case that a match between the position confirmation information and the displaying area is determined, it is determined that the target object finds the image.

Regarding the method for generating the interactive interface in the foregoing embodiment, the specific manner of performing operations in each step has been described in detail in the embodiments of the method for displaying the interactive interface, and will not be elaborated herein.

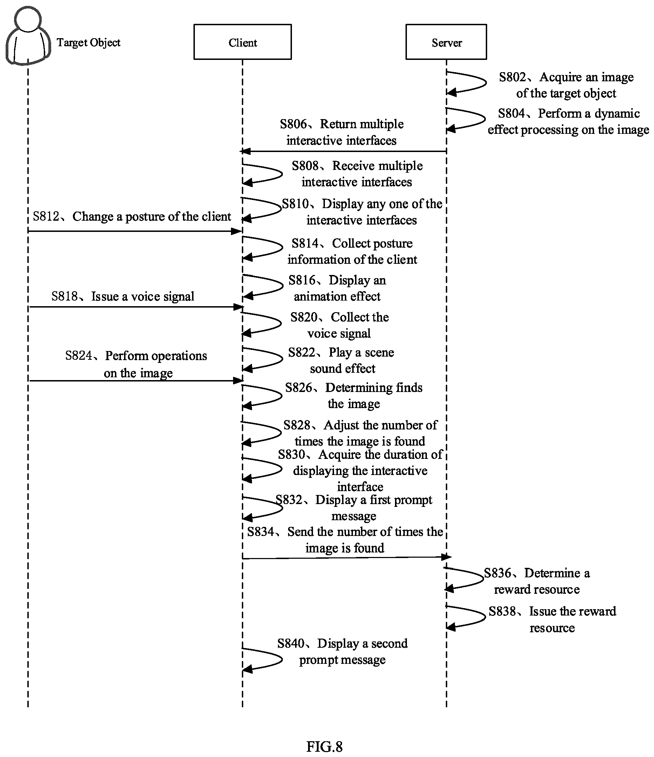

FIG. 8 is a time sequence diagram showing a method for displaying an interactive interface according to some embodiments. As shown in FIG. 8, the method for displaying the interactive interface is applied to the client 110 and the server 120 and includes the following steps.

In S802, an image of the target object is acquired.

In S804, a corresponding dynamic effect processing is performed on the image based on one or more dynamic effect materials, to obtain one or more interactive interfaces including the image.

In S806, one or more interactive interfaces are returned to the client.

In S808, one or more interactive interfaces are received.

In S810, any one of the interactive interfaces is displayed.

In S812, a posture of the client is changed.

In S814, posture information of the client is collected, and a second instruction content corresponding to the posture information is determined.

In S816, an animation effect corresponding to the second instruction content is displayed.

In some embodiments, the animation effect includes displaying an occluded image.

In S818, a voice signal is issued by the target object

In S820, the voice signal issued by the target object is collected, and a first instruction content corresponding to the voice signal is determined.

In S822, a scene sound effect corresponding to the first instruction content is acquired and played.

In S824, an operation is performed on the image.

In S826, it is determined that the target object finds the image in the interactive interface.

In S828, the number of times the image is found is adjusted accordingly.

In S830, the duration of displaying the interactive interface is acquired.

In S832, in case that the duration reaches an upper limit of the time threshold, a first prompt message is displayed, and the first prompt message includes the number of times the image is found.

In S834, the number of times the image is found is sent to the server.

In S836, a reward resource is determined according to the number of times the image is found.

In S838, the reward resource is issued to an account of the target object.

In S840, a second prompt message for indicating that issues reward resource to the account of the target object is displayed.

It should be understood that although the steps in the above flowchart are displayed in sequence as indicated by the arrows, these steps are not necessarily executed in sequence in the order indicated by the arrows. Unless there is a clear description in the present disclosure, there is no strict order for the execution of these steps, and these steps can be executed in other orders. Moreover, at least part of the steps in the above flowchart may include a plurality of steps or a plurality of stages. These steps or stages are not necessarily executed at the same time, but can be executed at different times. The order of execution of these steps or stages is not necessarily performed sequentially, but may be performed by turns or alternately with other steps or at least a part of the steps or stages in other steps.

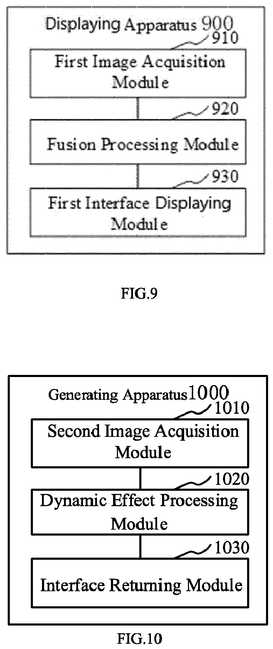

FIG. 9 is a block diagram showing an apparatus for displaying an interactive interface according to some embodiments. The apparatus includes a first image acquisition module 910, a fusion processing module 920, and a first interface displaying module 930.

The first image acquisition module 910 is configured to acquire an image of a target object in a live streaming interface.

The fusion processing module is configured to acquire an interactive interface for interacting with the target object by performing a fusion process on the image and a dynamic effect material, wherein all or a part of the image is occluded in an interactive interface.

The first interface displaying module is configured to display the interactive interface in the live streaming interface.

In some embodiments, the apparatus further includes an animation effect displaying module configured to display a corresponding animation effect based on a received interactive instruction for the interactive interface, and the animation effect comprising displaying the occluded image.

In some embodiments, the animation effect displaying module is further configured to: collect a voice signal issued by the target object and determine a first instruction content corresponding to the voice signal; acquire a scene sound effect corresponding to the first instruction content; and play the scene sound effect.

In some embodiments, the animation effect displaying module is further configured to: collect posture information of a client and determine a second instruction content corresponding to the posture information; and display an animation effect corresponding to the second instruction content.

In some embodiments, in case that a plurality of interactive interfaces are generated by respectively performing the fusion processes on the image and a plurality of the dynamic effect materials, the number of the interactive interfaces is multiple, and the apparatus further includes: a second interface displaying module configured to display a new interactive interface selected from a set of interactive interfaces, in response to determining that a touch position of the target object in the live streaming interface matches a displaying area of the image in the animation effect based on the interactive instruction. The set of interactive interfaces may comprise a plurality of interactive interfaces generated by the image and a plurality of the dynamic effect materials.

In some embodiments, the apparatus further includes a determining module configured to determine that the target object finds the image in the interactive interface, in response to determining that the touch position of the target object in the live streaming interface matches the displaying area of the image in the animation effect; a times adjustment module configured to accordingly adjust a number of times the image is found; a duration acquisition module configured to acquire a duration of displaying the interactive interfaces; and a first message displaying module configured to display a first prompt message, in case that the duration reaches an upper limit of a time threshold, wherein the first prompt message comprises the number of times the image is found.

In some embodiments, the apparatus further includes a second message displaying module configured to display the second prompt message for indicating that issues a reward resource to an account of the target object, wherein the reward resource is determined based on the number of times the image is found.

In some embodiments, the apparatus further includes a ranking list displaying module configured to display a ranking list of respective target objects in a live streaming room in response to a preset time for finding the images is up, wherein the ranking list is obtained by a sorting processing on final numbers of times images of respective target objects are found.

In some embodiments, the apparatus further includes an interactive object determination module configured to determine the target object of which final number of times of finding meets a preset condition as an interactive object, based on the final numbers of times images of respective target objects are found; and a communication connection module configured to establish a communication connection between an account of the interactive object and an account of an anchor.

In some embodiments, the apparatus further includes a display control displaying module configured to display a display control of the interactive interface in the live streaming interface. The first interface displaying module is further configured to display the interactive interface in the live streaming interface through the display control, in response to the display instruction of the interactive interface.

In some embodiments, the dynamic effect material is determined by any one of: acquiring the dynamic effect material generated by a multi-frame video image, wherein the multi-frame video image is a multi-frame image acquired in a live streaming scene or a video data of the target object; and acquiring the dynamic effect material from a dynamic effect material library, wherein the dynamic effect material library is a collection of dynamic effect materials stored on a client or a server.

In some embodiments, the image is determined by any one of: in response to a shooting instruction, acquiring the image obtained by shooting the target object or a target part of the target object; acquiring the image of the target object from an image library, wherein the image library is a collection of images stored on a client or a server; and acquiring a head portrait data of the target object.

In some embodiments, the interactive instruction includes any one of: the interactive instruction generated by touching the interactive interface; the interactive instruction determined by recognizing a posture of the target object; the interactive instruction determined by collected posture information of the client; and the interactive instruction determined by collected voice signal.

FIG. 10 is a block diagram showing an apparatus for generating an interactive interface according to some embodiments. The apparatus includes a second image acquisition module 1010, a dynamic effect processing module 1020, and an interface returning module 1030.

The second image acquisition module 1010 is configured to acquire an image of a target object in a live streaming interface.

The dynamic effect processing module 1020 is configured to acquire an interactive interface for interacting with the target object by performing a fusion process on the image and a dynamic effect material, wherein all or a part of the image is occluded in an interactive interface

The interface returning module 1030 is configured to return the interactive interface to a client, wherein the interactive interface is configured to instruct the client to display the interactive interface on the live streaming interface.

Regarding the apparatus in the foregoing embodiment, the specific manner in which each module performs operation has been described in detail in the embodiments of the method, and detailed description will not be given herein.

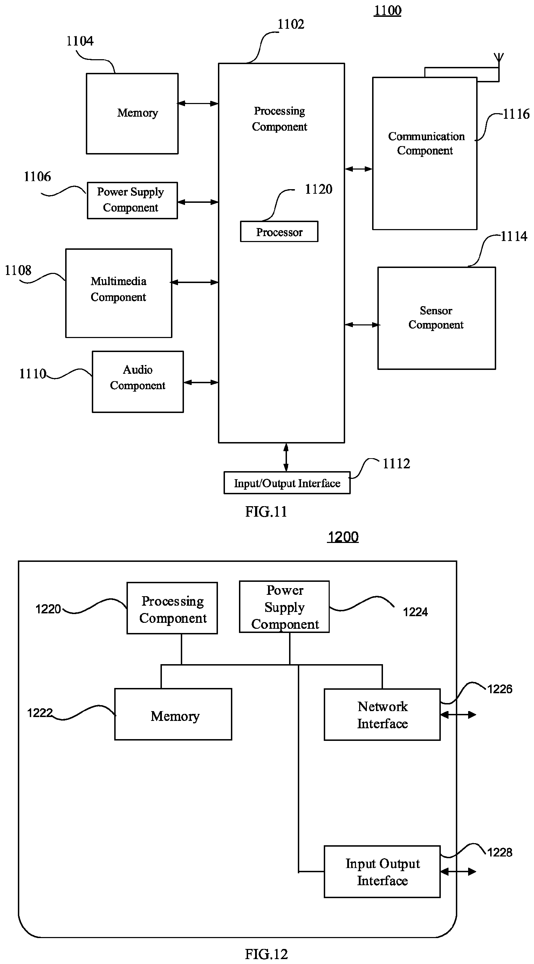

FIG. 11 is a block diagram showing a device 1100 for displaying an interactive interface according to some embodiments. For example, the device 1100 may be a mobile phone, a computer, a digital broadcasting terminal, a messaging device, a game console, a tablet device, a medical device, a fitness device, a personal digital assistant, etc.

Referring to FIG.11, the device 1100 may include one or more of the following components: a processing component 1102, a memory 1104, a power supply component 1106, a multimedia component 1108, an audio component 1110, and an input/output (I/O) interface 1112, a sensor component 1114, and a communication component 1116.

The processing component 1102 generally controls overall operations of the device 1100, such as operations associated with display, telephone calls, data communications, camera operations, and recording operations. The processing component 1102 may include one or more processors 1120 to execute instructions, so as to complete all or part of the steps of the foregoing method. In addition, the processing component 1102 may include one or more modules to facilitate the interaction between the processing component 1102 and other components. For example, the processing component 1102 may include a multimedia module to facilitate the interaction between the multimedia component 1108 and the processing component 1102.

The memory 1104 is configured to store various types of data to support operations in the device 1100. Examples of these data include instructions for any application or method operating on the device 1100, contact data, phone book data, messages, pictures, videos, etc. The memory 1104 may be implemented by any type of volatile or non-volatile storage device or a combination thereof, such as Static Random-Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, magnetic disk or optical disk.

The power supply component 1106 provides power for various components of the device 1100. The power supply component 1106 may include a power supply management system, one or more power supplies, and other components associated with the generation, management, and distribution of power for the device 1100.

The multimedia component 1108 includes a screen that provides an output interface between the device 1100 and the user. In some embodiments, the screen may include a Liquid Crystal Display (LCD) and a Touch Panel (TP). If the screen includes a touch panel, the screen may be implemented as a touch screen to receive input signals from the user. The touch panel includes one or more touch sensors to sense touch, sliding, and gestures on the touch panel. The touch sensor may not only sense the boundary of a touch operation or a slide operation, but also detect duration and pressure related to the touch or slide operation. In the embodiments of the disclosure, the multimedia component 1108 includes a front camera and/or a rear camera. When the device 1100 is in an operation mode, such as a shooting mode or a video mode, the front camera and/or the rear camera can receive external multimedia data. Each front camera and rear camera can be a fixed optical lens system or have focal length and optical zoom ability.

The audio component 1110 is configured to output and/or input audio signals. For example, the audio component 1110 includes a microphone (MIC). When the device 1100 is in an operation mode, such as a call mode, a recording mode, and a voice recognition mode, the microphone is configured to receive an external audio signal. The received audio signal can be further stored in the memory 1104 or sent via the communication component 1116. In the embodiments of the disclosure, the audio component 1110 further includes a speaker for outputting audio signals.

The I/O interface 1112 provides an interface between the processing component 302 and a peripheral interface module. The above-mentioned peripheral interface module may be a keyboard, a click wheel, a button, and the like. These buttons may include but are not limited to a home button, a volume button, a start button, and a lock button.

The sensor component 1114 includes one or more sensors for providing the device 1100 with various aspects of state evaluation. For example, the sensor component 1114 can detect the on/off status of the device 1100 and the relative positioning of the components. For example, the component is the display and the keypad of the device 1100. The sensor component 1114 can also detect the device 1100, position change of any of the components in device 1100, the presence or absence of contact between the user and the device 1100, the orientation or acceleration/deceleration of the device 1100, and the temperature change of the device 1100. The sensor component 1114 may include a proximity sensor configured to detect the presence of nearby objects when there is no physical contact. The sensor component 1114 may also include a light sensor for use in imaging applications, such as a Complementary Metal Oxide Semiconductor (CMOS) image sensor or a Charge-coupled Device (CCD) image sensor. In the embodiments of the disclosure, the sensor component 1114 may also include an acceleration sensor, a gyroscope sensor, a magnetic sensor, a pressure sensor or a temperature sensor.

The communication component 1116 is configured to facilitate wired or wireless communication between the device 1100 and other devices. The device 1100 can access a wireless network based on a communication standard, such as WiFi, an operator network (such as 2G, 3G, 4G, or 5G), or a combination thereof. In some embodiments, the communication component 1116 receives a broadcast signal or broadcast related information from an external broadcast management system via a broadcast channel. In the embodiments of the disclosure, the communication component 1116 further includes a Near Field Communication (NFC) module to facilitate short-range communication. For example, the NFC module can be implemented based on Radio Frequency Identification (RFID) technology, Infrared Data Association (IrDA) technology, Ultra Wide Band (UWB) technology, Bluetooth (BT) technology and other Technology.

In some embodiments, the device 1100 may be implemented by one or more Application Specific Integrated Circuits (ASIC), Digital Signal Processor (DSP), and Digital Signal Processor Device (DSPD), Programmable Logic Device (PLD), Field Programmable Gate Array (FPGA), controller, microcontroller, microprocessor or other electronic components, in order to perform the above methods.

In the embodiments of the disclosure, there is also provided a non-transitory computer-readable storage medium having instructions, such as the memory 1104 including instructions, which can be executed by the processor 1120 of the device 1100 to complete the foregoing method. For example, the non-transitory computer-readable storage medium may be ROM, Random Access Memory (RAM), Compact Disc Read-Only Memory (CD-ROM), magnetic tape, floppy disk, and optical data storage device, etc.

In some embodiments, a computer program product is also provided, including a computer program, which implements the above-mentioned interactive interface display method when the computer program is executed by a processor.

FIG. 12 is a block diagram showing a device 1200 for generating an interactive interface according to some embodiments. For example, the device 1200 may be provided as a server. Referring to FIG. 12, the device 1200 includes a processing component 1220, which further includes one or more processors, and a memory resource represented by a memory 1222, for storing instructions executable by the processing component 1220, such as an application program. The application program stored in the memory 1222 may include one or more modules, each of the modules corresponds to a set of instructions. In addition, the processing component 1220 is configured to execute instructions to execute the method for generating an interactive interface described above.

The device 1200 may also include a power supply component 1224 configured to perform power supply management of the device 1200, a wired or wireless network interface 1226 configured to connect the device 1200 to a network, and an input output (I/O) interface 1228. The device 1200 can operate based on an operating system stored in the memory 1222, such as Windows ServerTM, Mac OS XTM, UnixTM, LinuxTM, FreeBSDTM or the like.

In some embodiments, there is also provided a storage medium including instructions, for example, a memory 1222 including instructions, and the foregoing instructions may be executed by a processor of the device 1200 to complete the method for generating an interactive interface mentioned above. The storage medium may be a non-transitory computer-readable storage medium, for example, the non-transitory computer-readable storage medium may be ROM, Random Access Memory (RAM), CD-ROM, magnetic tape, floppy disk, optical data storage device, etc.

In some embodiments, a computer program product is also provided, including a computer program, which, when executed by a processor, implements the method for generating an interactive interface mentioned above.

The technical solution provided by the embodiments of the disclosure may include the following beneficial effects. By way of acquiring an image of a target object in a live streaming interface; acquiring an interactive interface for interacting with the target object by performing a fusion process on the image and a dynamic effect material, wherein all or a part of the image is occluded in an interactive interface, the interactive interface is displayed in the live streaming interface. The present disclosure increases the interactive mode of the live streaming room, improves the interactive effect and the interactive interest, thereby enhancing the user's interactive experience.

Preferred embodiments of the invention are specified in the following paragraphs.

Method for displaying an interactive interface, comprising: acquiring (S210a) an image of a target object in a live streaming interface; acquiring (S220a) an interactive interface for interacting with the target object by performing a fusion process on the image and a dynamic effect material, wherein all or a part of the image is occluded in an interactive interface; and displaying (S230a, S210b, S604) the interactive interface in the live streaming interface.

Method according to paragraph [00176], further comprising: displaying (S220b, S606) a corresponding animation effect based on a received interactive instruction for the interactive interface, and the animation effect comprising displaying the occluded image.

Method according to paragraph [00176] or paragraph [00177], wherein said displaying the corresponding animation effect based on the received interactive instruction for the interactive interface comprises: collecting (S310) a voice signal issued by the target object and determining a first instruction content corresponding to the voice signal; acquiring (S320) a scene sound effect corresponding to the first instruction content; and playing the scene sound effect.

Method according to paragraph [00176] or paragraph [00177], wherein said displaying the corresponding animation effect based on the received interactive instruction for the interactive interface comprises: collecting posture information of a client and determining a second instruction content corresponding to the posture information; and displaying (S220b) an animation effect corresponding to the second instruction content.

Method according to paragraph [00176] or paragraph [00177], wherein in case that a plurality of interactive interfaces are generated by respectively performing fusion processes on the image and a plurality of the dynamic effect materials, a number of the interactive interfaces is multiple; and the method further comprises: in response to determining that a touch position of the target object in the live streaming interface matches a displaying area of the image in the animation effect based on the interactive instruction, displaying (S230b, S608) a new interactive interface selected from a set of interactive interfaces, wherein the set of interactive interfaces comprises a plurality of interactive interfaces generated by the image and a plurality of the dynamic effect materials.

Method according to paragraph [00180] , further comprising: in response to determining that the touch position of the target object in the live streaming interface matches the displaying area of the image in the animation effect, determining (S410, S610) that the target object finds the image in the interactive interface; accordingly adjusting (S420, S612) a number of times the image is found; acquiring (S430, S614) a duration of displaying the interactive interfaces; and in case that the duration reaches an upper limit of a time threshold, displaying (S440, S616) a first prompt message, wherein the first prompt message comprises the number of times the image is found.

Method according to paragraph [00180], further comprising: displaying (S618) a second prompt message for indicating that issues a reward resource to an account of the target object, wherein the reward resource is determined based on the number of times the image is found.

Method according to paragraph [00180], further comprising: in response to a preset time for finding the image is up, displaying a ranking list of respective target objects in a live streaming room, wherein the ranking list is obtained by a sorting processing on final numbers of times images of respective target objects are found.

Method according to paragraph [00183], further comprising: determining the target object of which final number of times of finding meets a preset condition as an interactive object, based on the final numbers of times images of respective target objects are found; and establishing a communication connection between an account of the interactive object and an account of an anchor.

Method according to paragraphs [00176-00184], further comprising: displaying a display control of the interactive interface in the live streaming interface; wherein said displaying the interactive interface in the live streaming interface comprises: in response to the display instruction of the interactive interface, displaying the interactive interface in the live streaming interface through the display control.

Method according to paragraphs [00176-00184], the dynamic effect material is determined by any one of: acquiring the dynamic effect material generated by a multi-frame video image, wherein the multi-frame video image is a multi-frame image acquired in a live streaming scene or a video data of the target object; and acquiring the dynamic effect material from a dynamic effect material library, wherein the dynamic effect material library is a collection of dynamic effect materials stored on a client or a server.

Method according to paragraphs [00176-00184], wherein the image is determined by any one of: in response to a shooting instruction, acquiring the image obtained by shooting the target object or a target part of the target object; acquiring the image of the target object from an image library, wherein the image library is a collection of images stored on a client or a server; and acquiring a head portrait data of the target object.

Method according to paragraphs [00176-00184], wherein the interactive instruction comprises any one of: the interactive instruction generated by touching the interactive interface; the interactive instruction determined by recognizing a posture of the target object; the interactive instruction determined by collected posture information of the client; and the interactive instruction determined by collected voice signal.

Method for generating an interactive interface, comprising: acquiring (S710) an image of a target object in a live streaming interface; acquiring (S720) an interactive interface for interacting with the target object by performing a fusion process on the image and a dynamic effect material, wherein all or a part of the image is occluded in an interactive interface; and returning (S730) the interactive interface to a client, wherein the interactive interface is configured to instruct the client to display the interactive interface on the live streaming interface.

An apparatus for displaying an interactive interface, comprising: a first image acquisition module (910) configured to acquire an image of a target object in a live streaming interface; a fusion processing module (920) configured to acquire an interactive interface for interacting with the target object by performing a fusion process on the image and a dynamic effect material, wherein all or a part of the image is occluded in an interactive interface; and a first interface displaying module (930) configured to display the interactive interface in the live streaming interface.

Those skilled in the art will easily think of other embodiments of the present disclosure after considering the specification and practicing the invention disclosed herein. This application is intended to cover any variations, uses, or adaptive changes of the present disclosure. These variations, uses, or adaptive changes follow the general principles of the present disclosure and include common knowledge or conventional technical means in the technical field that are not disclosed in the present disclosure. The description and the embodiments are to be regarded as exemplary only, and the true scope and spirit of the present disclosure are pointed out by the following claims.

It should be understood that the present disclosure is not limited to the precise structure that has been described above and shown in the drawings, and various modifications and changes can be made without departing from its scope. The scope of the present disclosure is only limited by the appended claims.

## Claims

1. A method for displaying an interactive interface, comprising:
acquiring (S210a) an image of a target object in a live streaming interface;
acquiring (S220a) an interactive interface for interacting with the target object by performing a fusion process on the image and a dynamic effect material, wherein all or a part of the image is occluded in an interactive interface; and
displaying (S230a, S210b, S604) the interactive interface in the live streaming interface.

2. The method according to claim 1, further comprising:
displaying (S220b, S606) a corresponding animation effect based on a received interactive instruction for the interactive interface, and the animation effect comprising displaying the occluded image.

3. The method according to claim 2, wherein said displaying the corresponding animation effect based on the received interactive instruction for the interactive interface comprises:
collecting (S310) a voice signal issued by the target object and determining a first instruction content corresponding to the voice signal;
acquiring (S320) a scene sound effect corresponding to the first instruction content; and
playing the scene sound effect.

4. The method according to claim 2, wherein said displaying the corresponding animation effect based on the received interactive instruction for the interactive interface comprises:
collecting posture information of a client and determining a second instruction content corresponding to the posture information; and
displaying (S220b) an animation effect corresponding to the second instruction content.

5. The method according to claim 2, wherein in case that a plurality of interactive interfaces are generated by respectively performing fusion processes on the image and a plurality of the dynamic effect materials, a number of the interactive interfaces is multiple; and the method further comprises:
in response to determining that a touch position of the target object in the live streaming interface matches a displaying area of the image in the animation effect based on the interactive instruction, displaying (S230b, S608) a new interactive interface selected from a set of interactive interfaces,
wherein the set of interactive interfaces comprises a plurality of interactive interfaces generated by the image and a plurality of the dynamic effect materials.

6. The method according to claim 5, further comprising:
in response to determining that the touch position of the target object in the live streaming interface matches the displaying area of the image in the animation effect, determining (S410, S610) that the target object finds the image in the interactive interface;
accordingly adjusting (S420, S612) a number of times the image is found;
acquiring (S430, S614) a duration of displaying the interactive interfaces; and
in case that the duration reaches an upper limit of a time threshold, displaying (S440, S616) a first prompt message, wherein the first prompt message comprises the number of times the image is found.

7. The method according to claim 6, further comprising:
displaying (S618) a second prompt message for indicating that issues a reward resource to an account of the target object, wherein the reward resource is determined based on the number of times the image is found.

8. The method according to claim 6, further comprising:
in response to a preset time for finding the image is up, displaying a ranking list of respective target objects in a live streaming room, wherein the ranking list is obtained by a sorting processing on final numbers of times images of respective target objects are found.

9. The method according to claim 8, further comprising:
determining the target object of which final number of times of finding meets a preset condition as an interactive object, based on the final numbers of times images of respective target objects are found; and
establishing a communication connection between an account of the interactive object and an account of an anchor.

10. The method according to any one of claims 1-9, further comprising:
displaying a display control of the interactive interface in the live streaming interface;
wherein said displaying the interactive interface in the live streaming interface comprises:
in response to the display instruction of the interactive interface, displaying the interactive interface in the live streaming interface through the display control.

11. The method according to any one of claims 1-9, wherein the dynamic effect material is determined by any one of:
acquiring the dynamic effect material generated by a multi-frame video image, wherein the multi-frame video image is a multi-frame image acquired in a live streaming scene or a video data of the target object; and
acquiring the dynamic effect material from a dynamic effect material library, wherein the dynamic effect material library is a collection of dynamic effect materials stored on a client or a server.

12. The method according to any one of claims 1-9, wherein the image is determined by any one of:
in response to a shooting instruction, acquiring the image obtained by shooting the target object or a target part of the target object;
acquiring the image of the target object from an image library, wherein the image library is a collection of images stored on a client or a server; and
acquiring a head portrait data of the target object.

13. The method according to any one of claims 1-9, wherein the interactive instruction comprises any one of:
the interactive instruction generated by touching the interactive interface;
the interactive instruction determined by recognizing a posture of the target object;
the interactive instruction determined by collected posture information of the client; and
the interactive instruction determined by collected voice signal.

14. A method for generating an interactive interface, comprising:
acquiring (S710) an image of a target object in a live streaming interface;
acquiring (S720) an interactive interface for interacting with the target object by performing a fusion process on the image and a dynamic effect material, wherein all or a part of the image is occluded in an interactive interface; and
returning (S730) the interactive interface to a client, wherein the interactive interface is configured to instruct the client to display the interactive interface on the live streaming interface.

15. An apparatus for displaying an interactive interface, comprising:
a first image acquisition module (910) configured to acquire an image of a target object in a live streaming interface;
a fusion processing module (920) configured to acquire an interactive interface for interacting with the target object by performing a fusion process on the image and a dynamic effect material, wherein all or a part of the image is occluded in an interactive interface; and
a first interface displaying module (930) configured to display the interactive interface in the live streaming interface.
